(19) Europäisches Patentamt
European Patent Office
Office européen des brevets

(11) EP 2 227 029 A2

(12) EUROPEAN PATENT APPLICATION

(43) Date of publication:
08.09.2010 Bulletin 2010/36

(51) Int Cl.:
*H04N 13/00* (2006.01)

(21) Application number: 10250092.3

(22) Date of filing: 21.01.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 04.03.2009 JP 2009050452

(71) Applicant: Sony Corporation
Tokyo (JP)

(72) Inventor: Matsunaga, Masahiro
Tokyo (JP)

(74) Representative: Davies, Simon Robert
D Young & Co LLP
120 Holborn
London, EC1N 2DY (GB)

(54) **Image processing apparatus, image processing method, and program**

(57)     An image processing apparatus for synchronizing a first video stream constituted of a plurality of image data items and a second video stream different from the first video stream includes a calculation section and a detection section. The calculation section calculates, based on a data size of each of the plurality of image data items constituting the first video stream and the data size of each of image data items constituting the second video stream, a correlation value that represents a degree of similarity between the plurality of image data items constituting the first video stream and the image data items constituting the second video stream. The detection section detects the image data items constituting the second video stream and corresponding to the plurality of image data items constituting the first video stream based on the correlation value.

FIG.8

## Description

The present invention relates to an image processing apparatus, an image processing method, and a program, that synchronize a plurality of video streams.

From the past, there has been a recording/reproducing apparatus for recording a plurality of video streams simultaneously captured and then synchronizing and reproducing the recorded video streams, for example.

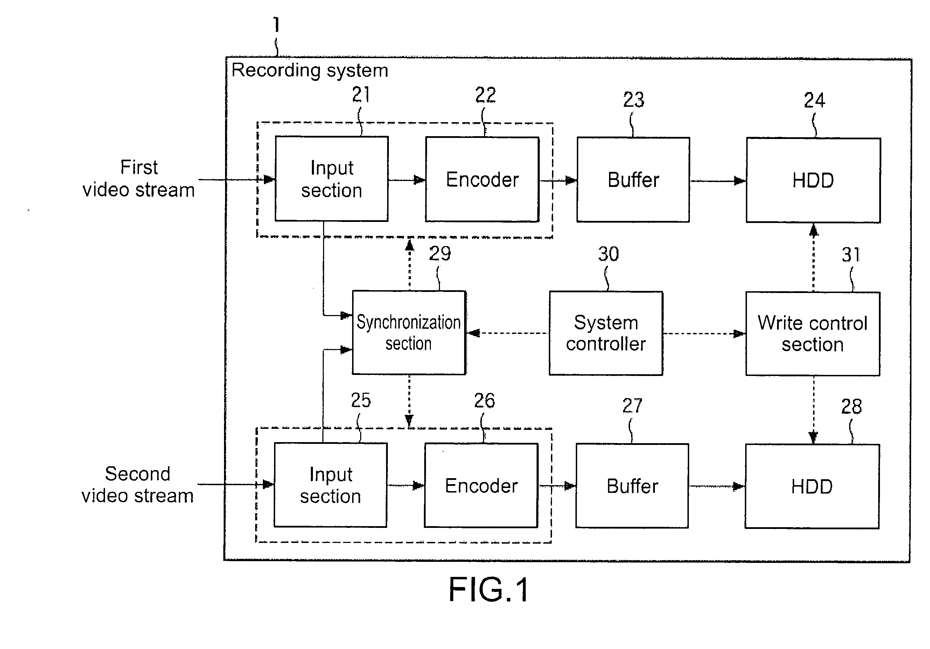

Fig. 1 shows a structural example of a recording system 1 in which a plurality of video streams simultaneously captured are recorded in a recording/reproducing apparatus in related art.

For example, the recording system 1 starts to record a first video stream and a second video stream at the same time. The first video stream is captured using a first camera (video camera) that captures an image of a subject from a predetermined direction, and the second video stream is captured using a second camera that captures an image of the same subject from a direction different from the predetermined direction.

The recording system 1 includes an input section 21, an encoder 22, a buffer 23, and an HDD (Hard Disk Drive) 24 that are used for recording the first video stream, an input section 25, an encoder 26, a buffer 27, and an HDD 28 that are used for recording the second video stream, and a synchronization section 29, a system controller 30, and a write control section 31 that are used for simultaneously recording the first and second video streams.

The input section 21 receives an input of the first video stream captured using the first camera, for example. For synchronization of the input first video stream, the input section 21 generates a vertical synchronizing signal, a horizontal synchronizing signal, a clock signal, and the like as synchronizing signals, and supplies them to the encoder 22 and the synchronization section 29.

Further, the input section 21 supplies the first video stream to the encoder 22.

It should be noted that the first video stream is constituted of image data items representing a plurality of frames, the image data items being captured using the first camera.

In accordance with an instruction of the synchronization section 29, the encoder 22 encodes (compresses) a series of image data items that constitute the first video stream input from the input section 21 by performing intra-frame encoding while using the synchronizing signals transmitted from the input section 21, and acquires a first encoded stream constituted of a plurality of encoded data items obtained as the result of the encoding.

Further, the encoder 22 detects a data size of each of the encoded data items constituting the acquired first encoded stream.

The encoder 22 adds a header including the data sizes of the encoded data items that are obtained by the detection to the acquired first encoded stream, and supplies the first encoded stream after the addition to the buffer 23 so that the buffer 23 temporarily retains it.

The buffer 23 temporarily retains the first encoded stream supplied from the encoder 22.

The HDD 24 records the first encoded stream retained in the buffer 23 in a built-in hard disk (not shown).

It should be noted that since the input section 25, the encoder 26, the buffer 27, and the HDD 28 are structured the same as the input section 21, the encoder 22, the buffer 23, and the HDD 24 described above, descriptions thereof are omitted.

In the input section 25, the encoder 26, the buffer 27, and the HDD 28, the second video stream input to the input section 25 is encoded into a second encoded stream and recorded in the HDD 28.

The synchronization section 29 judges whether the video streams are input to both the input section 21 and the input section 25, based on whether the synchronizing signals have been supplied from the input section 21 and the input section 25.

Then, when judging that the video streams are input to both the input section 21 and the input section 25, the synchronization section 29 controls the input section 21, the encoder 22, the input section 25, and the encoder 26 to synchronize the video streams that are input to the input section 21 and the input section 25 at the same timing at which the video streams have been input to the input section 21 and the input section 25 so that processing such as encoding is performed.

The system controller 30 controls the synchronization section 29 and the write control section 31.

In accordance with an instruction of the system controller 30, the write control section 31 controls the HDD 24 to record the first encoded stream retained in the buffer 23.

Further, in accordance with an instruction of the system controller 30, the write control section 31 controls the HDD 28 to record the second encoded stream retained in the buffer 27.

According to the recording system 1, it is possible to record the first video stream and the second video stream constituted of the plurality of image data items that are obtained by capturing images at the same timing, as the first encoded stream and the second encoded stream, respectively.

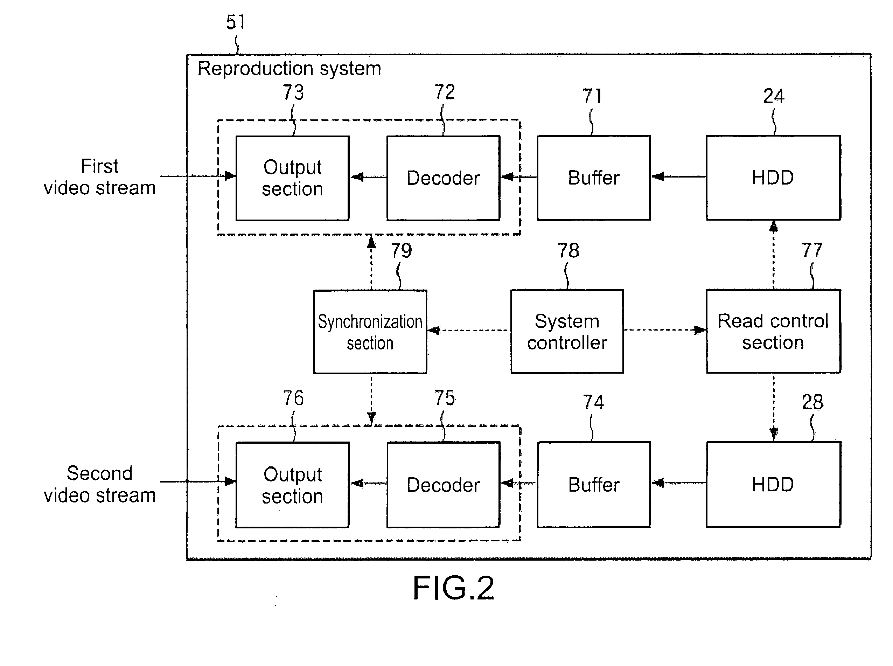

Next, Fig. 2 shows a structural example of a reproduction system 51 in which each of the first and second encoded streams that have been recorded by the recording system 1 is decoded and reproduced (output) in the recording/reproducing apparatus in related art.

The reproduction system 51 synchronizes and reproduces the first encoded stream and the second encoded stream recorded by the recording system 1 in the HDD 24 and the HDD 28, respectively, and outputs the first and second video streams consequently obtained to a subsequent stage. In the output first and second video streams, image data items are combined and thus an image stereoscopically viewed is generated.

The reproduction system 51 includes a buffer 71, a decoder 72, and an output section 73 that are used for reproducing the first encoded stream recorded in the HDD 24, a buffer 74, a decoder 75, and an output section 76 that are used for reproducing the second encoded stream recorded in the HDD 28, and a read control section 77, a system controller 78, and a synchronization section 79 that are used for controlling synchronized reproduction of the first and second video streams.

The buffer 71 temporarily retains the first encoded stream supplied from the HDD 24.

The decoder 72 decodes (the encoded data items constituting) the first encoded stream supplied from the buffer 71 and supplies the consequently-obtained first video stream to the output section 73.

The output section 73 adds a synchronizing signal or the like to image data items constituting the first video stream supplied from the decoder 72, and outputs the same video stream as the first video stream that has been input to the input section 21 of the recording system 1.

Since the buffer 74, the decoder 75, and the output section 76 are structured the same as the buffer 71, the decoder 72, and the output section 73 described above, descriptions thereof are omitted.

In the buffer 74, the decoder 75, and the output section 76, the second encoded stream recorded in the HDD 28 is decoded into the second video stream and output.

In accordance with an instruction of the system controller 78, the read control section 77 controls the HDD 24 to read the first encoded stream and supply it to the buffer 71.

Further, in accordance with an instruction of the system controller 78, the read control section 77 controls the HDD 28 to read the second encoded stream and supply it to the buffer 74.

The system controller 78 controls the read control section 77 and the synchronization section 79.

The synchronization section 79 controls the decoder 72 to decode an x-th encoded data item out of the plurality of encoded data items constituting the first encoded stream and supply an x-th image data item consequently obtained to the output section 73.

Further, the synchronization section 79 controls the decoder 75 to decode an x-th encoded data item out of the plurality of encoded data items constituting the second encoded stream and supply an x-th image data item consequently obtained to the output section 76.

Furthermore, the synchronization section 79 controls the output section 73 and the output section 76 to output, to a subsequent stage at the same timing, the x-th image data item supplied from the decoder 72 to the output section 73 and the x-th image data item supplied from the decoder 75 to the output section 76.

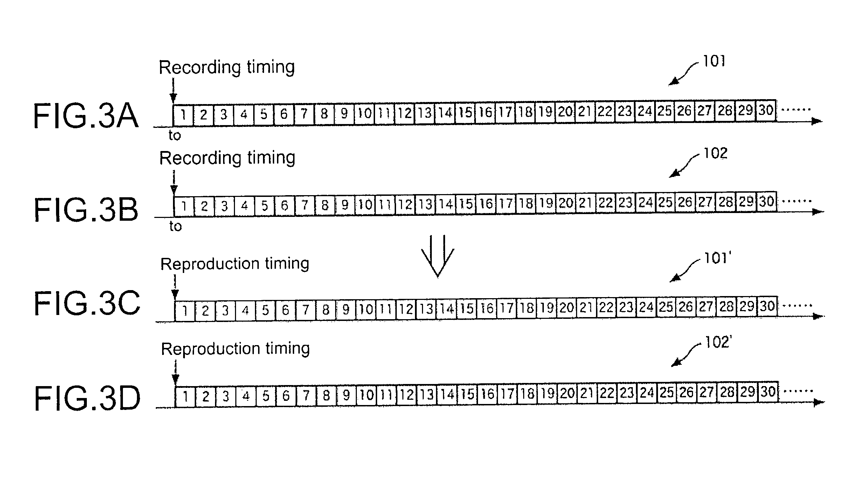

Next, Figs. 3 show a timing at which encoding and recording of each of the first video stream input to the input section 21 and the second video stream input to the input section 25 are started in the recording system 1, and a timing at which decoding and reproduction of each of the first encoded stream recorded in the HDD 24 and the second encoded stream recorded in the HDD 28 are started in the reproduction system 51.

It should be noted that in Figs. 3A and 3B, horizontal axes represents the same time.

Further, in Figs. 3A and 3B, a rectangle represents an encoded data item constituting the encoded stream. Moreover, a number within the rectangle represents a position number of an encoded data item when counted from the head of the encoded data items constituting the encoded stream.

The same holds true for Figs. 3C and 3D.

As shown in Fig. 3A, the recording system 1 starts encoding from an image data item obtained by capturing an image at a timing t0, out of a plurality of image data items constituting the first video stream input to the input section 21, for example. Then, the recording system 1 causes the HDD 24 to record a first encoded stream 101 constituted of a plurality of encoded data items obtained through that encoding.

Further, as shown in Fig. 3B, the recording system 1 starts encoding from an image data item obtained by capturing an image at the same timing t0 as the timing t0 shown in Fig. 3A, out of a plurality of image data items constituting the second video stream input to the input section 25. Then, the recording system 1 causes the HDD 28 to record a second encoded stream 102 constituted of a plurality of encoded data items obtained through that encoding.

The reproduction system 51 decodes the first encoded stream 101 recorded in the HDD 24 and acquires a first video stream 101' consequently obtained.

Further, the reproduction system 51 decodes the second encoded stream 102 recorded in the HDD 28 and acquires a second video stream 102' consequently obtained.

Then, the reproduction system 51 outputs an x-th image data item out of a plurality of image data items constituting the first video stream 101' and an x-th image data item out of a plurality of image data items constituting the second video stream 102' at the same timing.

As described above, in the recording system 1, the encoding is started from the image data items obtained by capturing images at the same timing t0 and the consequently-obtained first encoded stream 101 and second encoded stream 102 are recorded.

Further, in the reproduction system 51, the x-th image data items from the head in the first video stream 101' as a decoding result obtained by decoding the first encoded stream 101 and the second video stream 102' as a decoding result obtained by decoding the second encoded stream 102 are output (reproduced) at the same timing.

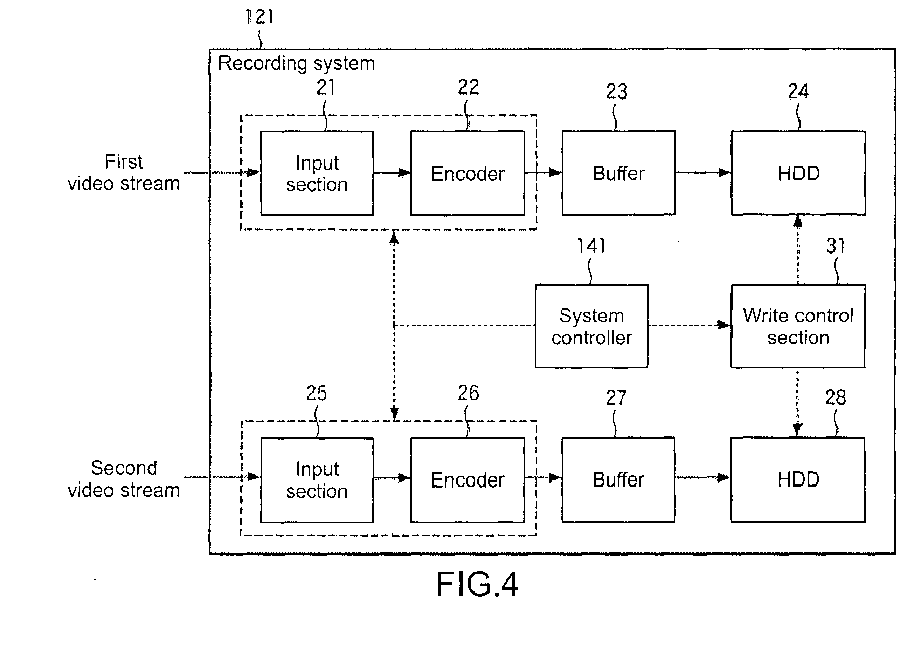

Next, Fig. 4 shows a structural example of a recording system 121 where a time at which recording of the first video stream is started and a time at which recording of the second video stream is started are shifted from each other because the synchronization section 29 (Fig. 1) is not provided.

It should be noted that in the recording system 121, portions structured the same as those of the recording system 1 are denoted by the same reference symbols, and accordingly descriptions thereof are omitted.

That is, the recording system 121 is structured the same as the recording system 1 except that a system controller 141 is provided instead of the synchronization section 29 and the system controller 30.

The system controller 141 controls the input section 21, the encoder 22, the input section 25, and the encoder 26 to perform processing such as encoding on the video streams input to the input section 21 and the input section 25.

Further, the system controller 141 controls the write control section 31.

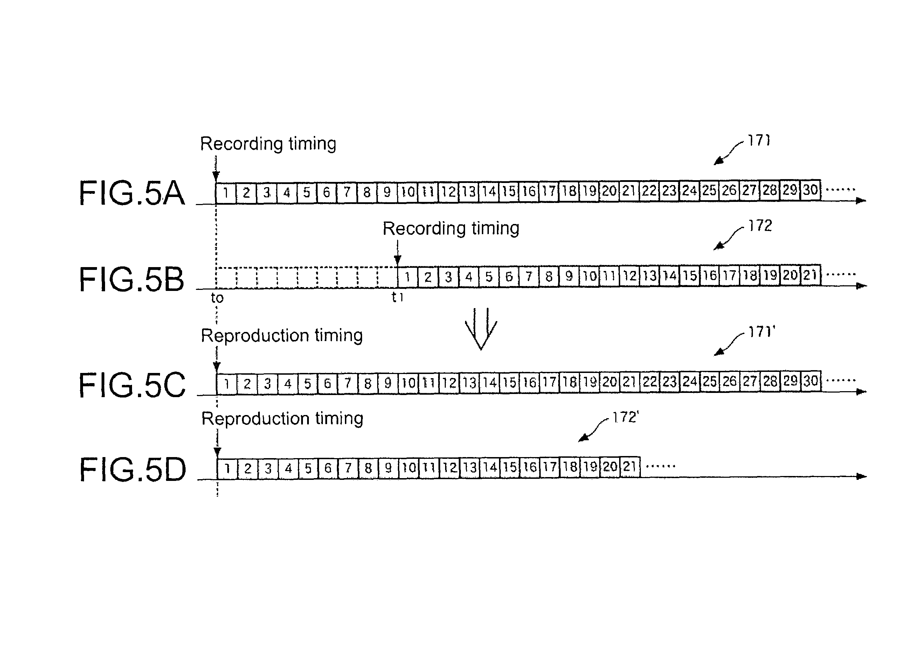

Next, Figs. 5 show a timing at which encoding and recording of each of the first video stream input to the input section 21 and the second video stream input to the input section 25 are started in the recording system 121, and a timing at which decoding and output of each of the first encoded stream recorded in the HDD 24 by the recording system 121 and the second encoded stream recorded in the HDD 28 by the recording system 121 are started in the reproduction system 51.

It should be noted that horizontal axes and rectangles shown in Figs. 5A to 5D are the same as those in Figs. 3A to 3D.

As shown in Fig. 5A, the recording system 121 starts encoding from an image data item obtained by capturing an image at a timing t0, out of a plurality of image data items constituting the first video stream input to the input section 21, for example, and then causes the HDD 24 to record a first encoded stream 171 consequently obtained.

Further, as shown in Fig. 5B, the recording system 121 starts encoding from an image data item obtained by capturing an image at a timing t1 different from the timing t0, out of a plurality of image data items constituting the second video stream input to the input section 25, and then causes the HDD 28 to record a second encoded stream 172 consequently obtained.

Since the recording system 121 is not provided with the synchronization section 29, the timings at which the encoding and recording are started are difficult to be synchronized with each other.

As a result, in the recording system 121, the timing t0 at which the encoding and recording of the first video stream input to the input section 21 are started and the timing t1 at which the encoding and recording of the second video stream input to the input section 25 are started are shifted by a time (t1 - t0) equivalent to 9 frames.

The reproduction system 51 decodes the first encoded stream 171 recorded in the HDD 24 and acquires a first video stream 171' consequently obtained.

Further, the reproduction system 51 decodes the second encoded stream 172 recorded in the HDD 28 and acquires a second video stream 172' consequently obtained.

Then, the reproduction system 51 outputs x-th image data items of the first video stream 171' and the second video stream 172' at the same timing.

As described above, the timing t0 at which the encoding and recording of the first video stream input to the input section 21 are started and the timing t1 at which the encoding and recording of the second video stream input to the input section 25 are started are shifted by the time (t1 - t0) equivalent to 9 frames.

Accordingly, an (x + 9)-th encoded data item (x is natural number) constituting the first encoded stream 171 and an x-th encoded data item constituting the second encoded stream 172 are assumed to be obtained by capturing images at the same timing.

Therefore, the reproduction system 51 outputs, at the same timing, image data items obtained by capturing images at different timings shifted by the time (t1 - t0) equivalent to 9 frames in the first video stream 171' and the second video stream 172'.

As described above, when the reproduction system 51 starts the decoding and output of each of the first encoded stream 171 and the second encoded stream 172 that have been recorded by the recording system 121, the image data items obtained by capturing images at the timings shifted by the time (t1 - t0) equivalent to 9 frames may be output at the same timing.

Accordingly, in the reproduction system 51, it is difficult to synchronize the first video stream 171' and the second video stream 172' so that the image data items obtained by capturing images at the same timing in the first encoded stream 171 and the second encoded stream 172 recorded by the recording system 121 are simultaneously reproduced (output).

In order to cope with the situation as described above, there is a first related art in which audio data items corresponding to the image data items are compared with each other, a time difference representing a shift in time by using the audio data items is detected, and the image data items that have been obtained by capturing images at the same timing are synchronized with each other based on the detected time difference (see Japanese Patent Application Laid-open No. 2007-288269, for example).

In addition, there is a second related art in which synchronizing control signals are simultaneously transmitted to two cameras and the two cameras take images simultaneously in accordance with the synchronizing control signals so that video streams are output (see Japanese Patent Application Laid-open No. 2003-304442, for example).

Moreover, there is a third related art in which count outputs of system time clocks are compared with each other based on system time clock reference of video streams constituted of pictures encoded in conformity with an MPEG (Moving Picture Experts Group) method, and a reproduction speed is controlled in accordance with the comparison result (see Japanese Patent Application Laid-open No. 11-150727, for example).

However, in the above first related art using the audio, in a case where image data items obtained by images captured using a camera and audio data items corresponding thereto are shifted in time, accuracy of synchronization between image data items obtained by capturing images at the same timing is reduced.

Further, in the above second related art using the synchronizing control signals, the cameras are needed to correspond to the synchronizing control signals, and therefore video streams captured using an arbitrary camera are difficult to be synchronized with each other.

In addition, the third related art using the system time clock reference in related art is difficult to be applied to video streams other than the video streams constituted of pictures encoded in conformity with the MPEG method.

Various respective aspects and features of the invention are defined in the appended claims. Combinations of features from the dependent claims may be combined with features of the independent claims as appropriate and not merely as explicitly set out in the claims.

The approach described herein helps to accurately synchronize a plurality of video streams with each other based on data sizes of the plurality of video streams obtained by capturing images of a single subject, for example.

According to an embodiment of the present invention, there is provided an image processing apparatus synchronizing a first video stream constituted of a plurality of image data items and a second video stream different from the first video stream, the image processing apparatus including: a calculation means for calculating, based on a data size of each of the plurality of image data items constituting the first video stream and the data size of each of image data items constituting the second video stream, a correlation value that represents a degree of similarity between the plurality of image data items constituting the first video stream and the image data items constituting the second video stream; and a detection means for detecting the image data items constituting the second video stream and corresponding to the plurality of image data items constituting the first video stream based on the correlation value.

It is possible to further include an encoding means for intra-frame encoding the first video stream and the second video stream by variable bit rate control in which the data size after the encoding is changed in accordance with image contents of the image data items, and in the calculation means, calculate the correlation value based on the data size of each of the plurality of image data items constituting the encoded first video stream and the data size of each of the image data items constituting the encoded second video stream.

It is possible to further include a decoding means for decoding the first video stream and the second video stream that have been encoded by an encoding different from the intra-frame encoding by the variable bit rate control, and in the encoding means, intra-frame encode the decoded first video stream and the decoded second video stream by the variable bit rate control.

In the calculation means, the correlation value that represents a degree of similarity in GOPs (Group of Pictures) between the plurality of image data items constituting the first video stream and the image data items constituting the second video stream can be calculated based on the data size of the GOP having the plurality of image data items constituting the first video stream and the data size of the GOP having the image data items constituting the second video stream. In the detection means, the image data items constituting the second video stream and corresponding to the plurality of image data items constituting the first video stream in GOPs can be detected based on the correlation value.

In the calculation means, a sum of squared differences between the data size of each of the plurality of image data items constituting the first video stream and the data size of each of the image data items constituting the second video stream can be calculated as the correlation value. In the detection means, the image data items constituting the second video stream can be detected when the correlation value between the plurality of image data items constituting the first video stream and the image data items constituting the second video stream is equal to or smaller than a predetermined threshold value.

The image data items constituting each of the first video stream and the second video stream can be different from each other in data size in accordance with the image contents of the image data items.

According to another embodiment of the present invention, there is provided an image processing method for an image processing apparatus that synchronizes a first video stream constituted of a plurality of image data items and a second video stream different from the first video stream, the image processing apparatus including a calculation means and a detection means, the image processing method including: calculating, by the calculation means, based on a data size of each of the plurality of image data items constituting the first video stream and the data size of each of image data items constituting the second video stream, a correlation value that represents a degree of similarity between predetermined image data items constituting the first video stream and the image data items constituting the second video stream; and detecting, by the detection means, the image data items constituting the second video stream and corresponding to the plurality of image data items constituting the first video stream based on the correlation value.

According to another embodiment of the present invention, there is provided a recording medium recording a program causing a computer of an image processing apparatus that synchronizes a first video stream constituted of a plurality of image data items and a second video stream different from the first video stream, to function as: a calculation means for calculating, based on a data size of each of the plurality of image data items constituting the first video stream and the data size of each of image data items constituting the second video stream, a correlation value that represents a degree of similarity between predetermined image data items constituting the first video stream and the image data items constituting the second video stream; and a detection means for detecting the image data items constituting the second video stream and corresponding to the plurality of image data items constituting the first video stream based on the correlation value.

According to another embodiment of the present invention, there is provided an image processing apparatus synchronizing a first video stream constituted of a plurality of image data items and a second video stream different from the first video stream, the image processing apparatus including: a calculation section to calculate, based on a data size of each of the plurality of image data items constituting the first video stream and the data size of each of image data items constituting the second video stream, a correlation value that represents a degree of similarity between the plurality of image data items constituting the first video stream and the image data items constituting the second video stream; and a detection section to detect the image data items constituting the second video stream and corresponding to the plurality of image data items constituting the first video stream based on the correlation value.

According to the embodiments of the present invention, based on the data size of each of the plurality of image data items constituting the first video stream and the data size of each of the image data items constituting the second video stream, the correlation value that represents the degree of similarity between the plurality of image data items constituting the first video stream and the image data items constituting the second video stream is calculated, and the image data items constituting the second video stream is detected based on the correlation value, the image data items corresponding to the plurality of image data items constituting the first video stream.

According to the embodiments of the present invention, it is possible to accurately synchronize a plurality of video streams obtained by capturing images of a single subject, for example, or simultaneously captured with one another on a frame (field) basis.

Embodiments of the invention will now be described with reference to the accompanying drawings, throughout which like parts are referred to by like references, and in which:

Fig. 1 is a block diagram showing an example of a recording system in a recording/reproducing apparatus in related art;
Fig. 2 is a block diagram showing an example of a reproduction system in the recording/reproducing apparatus in related art;
Figs. 3 are diagrams showing recording timings and reproduction timings;
Fig. 4 is a block diagram showing an example of another recording system in the recording/reproducing apparatus in related art;
Figs. 5 are diagrams showing recording timings and reproduction timings;
Fig. 6 is a block diagram showing a structural example of a reproduction apparatus in an embodiment of the present invention;
Figs. 7 are diagrams showing reproduction timings in the embodiment of the present invention;
Fig. 8 is a block diagram showing a structural example of a frame controller;
Fig. 9 is a flowchart for explaining correlation position detection processing;
Figs. 10 are diagrams for explaining an embodiment of the present invention with a GOP (Group of Pictures) as a target;
Figs. 11 are diagrams showing a state where divided video streams are reconstructed;
Fig. 12 is a block diagram showing a structural example of a recording/reproducing apparatus in an embodiment of the present invention; and
Fig. 13 is a block diagram showing a structural example of a personal computer.

A description will be given in the following order:

1. Embodiment of the present invention (example in which data sizes of encoded data items are compared with each other)

2. Modified example

(1. Embodiment of the present invention)

(Structural example of reproduction apparatus 191)

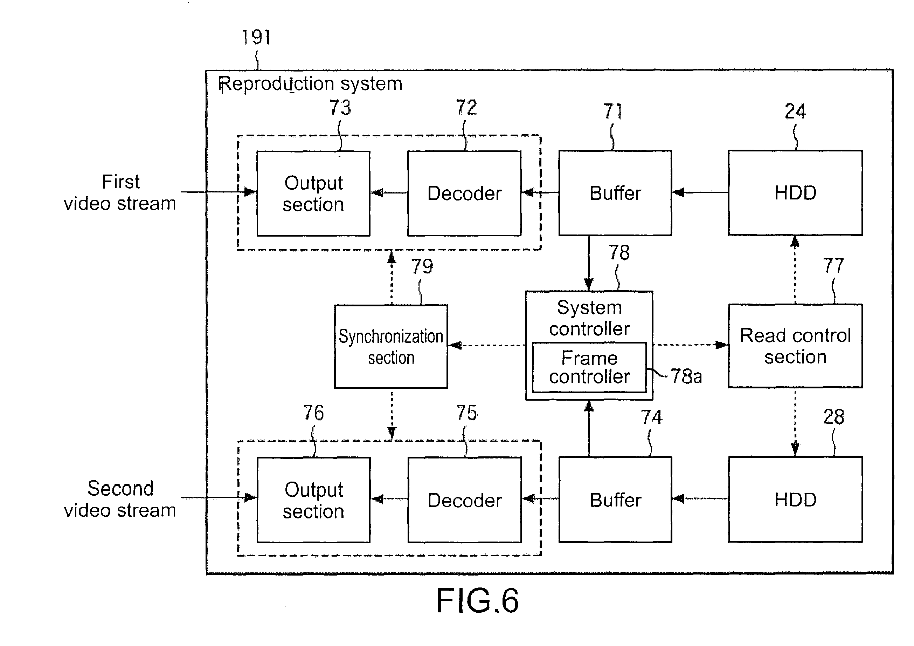

Fig. 6 shows a structural example of a reproduction apparatus 191 of this embodiment.

It should be noted that since portions of the reproduction apparatus 191 that correspond to those of the reproduction system 51 are denoted by the same reference symbols, descriptions thereof are omitted hereinbelow.

Specifically, the reproduction apparatus 191 is structured the same as the reproduction system 51 except that the system controller 78 includes a frame controller 78a.

Further, in the reproduction apparatus 191, the first encoded stream 171 is recorded in the HDD 24 in advance and the second encoded stream 172 is recorded in the HDD 28 in advance.

It should be noted that the first encoded stream 171 and the second encoded stream 172 are recorded in the HDD 24 and the HDD 28, respectively, at different timings at which encoding and recording of each of the first video stream and the second video stream are started.

The frame controller 78a is supplied with the first encoded stream 171 from the HDD 24 via the buffer 71, and with the second encoded stream 172 from the HDD 28 via the buffer 74.

Based on data sizes of encoded data items constituting the first encoded stream 171 supplied from the buffer 71 and those of encoded data items constituting the second encoded stream 172 supplied from the buffer 74, the frame controller 78a calculates a correlation value representing correlation between data sizes of corresponding encoded data items.

Then, based on the calculated correlation value, the frame controller 78a controls the synchronization section 79 so that the first video stream 171' and the second video stream 172' are synchronized with each other.

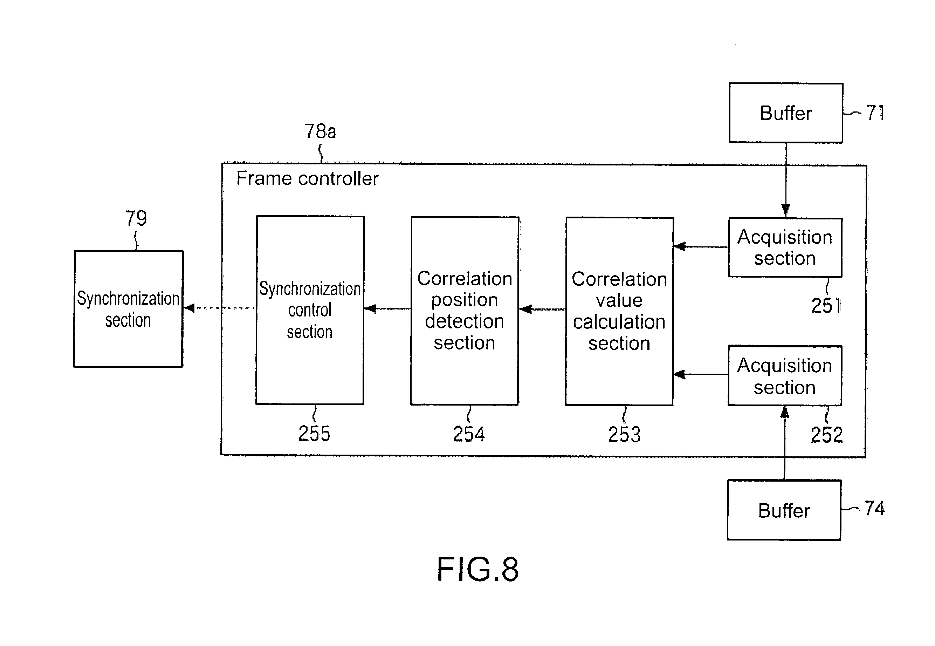

It should be noted that details on the frame controller 78a are described with reference to Fig. 8 described later.

(Description on timings of recording and reproduction)

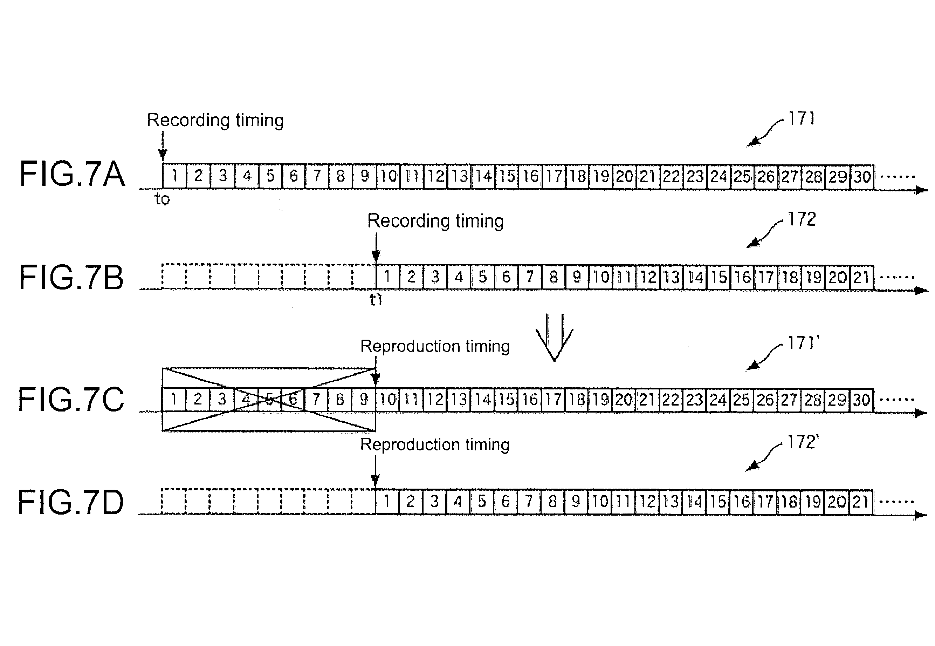

Figs. 7 show timings at which decoding and output of each of the first encoded stream 171 recorded in the HDD 24 in advance and the second encoded stream 172 recorded in the HDD 28 in advance are started in the reproduction apparatus 191.

It should be noted that horizontal axes and rectangles shown in Figs. 7A to 7D are the same as those in Figs. 5A to 5D.

Based on the data sizes of the encoded data items constituting the first encoded stream 171 recorded in the HDD 24 and the data sizes of the encoded data items constituting the second encoded stream 172 recorded in the HDD 28, the reproduction apparatus 191 detects positions of image data items with which the first video stream 171' and the second video stream 172' are synchronized with each other.

In other words, for example, based on the data sizes of the first encoded stream 171 and the second encoded stream 172, the reproduction apparatus 191 detects a position of a 10-th encoded data item out of the encoded data items constituting the first encoded stream 171 and a position of a first encoded data item out of the encoded data items constituting the second encoded stream 172, as positions where image data items obtained by capturing images at the same timing are present.

Further, the reproduction apparatus 191 decodes the first encoded stream 171 recorded in the HDD 24 and acquires the first video stream 171' consequently obtained.

Furthermore, the reproduction apparatus 191 decodes the second encoded stream 172 recorded in the HDD 28 and acquires the second video stream 172' consequently obtained.

The reproduction apparatus 191 then synchronizes the first video stream 171' and the second video stream 172' at a position of the first video stream 171', which corresponds to the position of the 10-th encoded data item in the first encoded stream 171, and at a position of the second video stream 172', which corresponds to the position of the first encoded data item in the second encoded stream 172, and outputs them.

In other words, for example, the reproduction apparatus 191 synchronizes a 10-th image data item located after a first to 9-th image data items jumped over (skipped) out of image data items constituting the first video stream 171', and a first image data item out of image data items constituting the second video stream 172' so that those image data items are output at the same timing.

In addition, the reproduction apparatus 191 similarly synchronizes an 11-th and subsequent image data items out of the plurality of image data items constituting the first video stream 171' and a second and subsequent image data items out of the plurality of image data items constituting the second video stream 172' with each other.

(Structural example of frame controller 78a)

Fig. 8 shows a detailed structural example of the frame controller 78a.

The frame controller 78a includes an acquisition section 251, an acquisition section 252, a correlation value calculation section 253, a correlation position detection section 254, and a synchronization control section 255.

The acquisition section 251 reads the header added to the first encoded stream 171 retained in the buffer 71.

Then, the acquisition section 251 acquires a data size of an x-th encoded data item constituting the first encoded stream 171 f(x)(x = 1, 2, ...) from the read header and supplies it to the correlation value calculation section 253.

The acquisition section 252 reads the header added to the second encoded stream 172 retained in the buffer 74.

Then, the acquisition section 252 acquires a data size of a y-th encoded data item constituting the second encoded stream 172 g(y)(y = 1, 2, ...) from the read header and supplies it to the correlation value calculation section 253.

The correlation value calculation section 253 applies the data size f(x) supplied from the acquisition section 251 and the data size g(y) supplied from the acquisition section 252 to the following Equation (1) and calculates a sum of squared differences as a correlation value of the f(x) and the g(y).

(Equation 1)

$$Z(j, k) = \sum_i \{f(i+j) - g(i+k)\}^2 \quad \cdots (1)$$

It should be noted that in Equation (1), a numerical subscript i is a value ranging from 0 to N (N is integer of 0 or more).

Moreover, a numerical subscript j represents a j-th position from the head in the first encoded stream 171 and a numerical subscript k represents a k-th position from the head in the second encoded stream 172. The numerical subscripts j and k are natural numbers.

A correlation value z(j,k) is represented by a summation of a square $\{f(i+j)-g(i+k)\}^2$ of a difference $\{f(i+j)-g(i+k)\}$ between a data size f(i+j) of an (i+j)-th encoded data item in the first encoded stream 171 and a data size g(i+k) of an (i+k)-th encoded data item in the second encoded stream 172.

Incidentally, the first video stream 171' and the second video stream 172' are obtained by capturing images of a single subject as a target, and the plurality of image data items constituting the first and second video streams have the same data size by constant bit rate control by which a data size of an image data item is made constant.

Further, the first encoded stream 171 and the second encoded stream 172 are obtained by intra-frame encoding the image data items.

It should be noted that in the intra-frame encoding, variable bit rate control by which a data size of image data is made variable is performed so that the data size of image data is made appropriate in accordance with contents such as a subject displayed in an image corresponding to the image data.

Specifically, for example, in a case where image data represents a monotonous image like the blue sky in which there are less changes, the image data is compressed at a large compression rate and becomes encoded data of a small data size by the intra-frame encoding.

Further, for example, in a case where the image data represents a complicated image like a plurality of persons and buildings, the image data is compressed at a small compression rate and becomes encoded data of a large data size by the intra-frame encoding.

Moreover, as described above, the first video stream 171' and the second video stream 172' are obtained by capturing images with the single subject as a target.

Accordingly, as the square $\{f(x)-g(y)\}^2$ of the difference between the data sizes of the encoded data items becomes small, it is highly possible that between corresponding image data items, contents displayed by (images represented by) the image data items are similar to each other. Thus, it is highly possible that the image data items are obtained by capturing images at the same timing.

Therefore, as the correlation value z(j,k) becomes small, correlation representing a degree of similarity between image data items corresponding to the j-th to (N+j)-th encoded data items constituting the first encoded stream 171 and image data items corresponding to the k-th to (N+k)-th encoded data items constituting the second encoded stream 172 becomes high.

It should be noted that the reason why the data sizes between image data items before the encoding is performed are not directly compared with each other is that each of the image data items has the same data size by the constant bit rate control by which the data size of an image data item is made constant.

Accordingly, in a case where the data sizes of the image data items are different from each other in accordance with image contents such as a subject displayed using the image data items, it is possible to calculate a correlation value z(j,k) by the intra-frame encoding without changing a data size.

The correlation value calculation section 253 supplies the correlation value z(j,k) calculated from Equation (1) to the correlation position detection section 254 together with (data representing) the numerical subscripts j and k.

The correlation position detection section 254 judges whether the correlation value z(j,k) supplied from the correlation value calculation section 253 is equal to or smaller than a predetermined threshold value, that is, whether it is highly possible that a j-th encoded data item constituting the first encoded stream 171 and a k-th encoded data item constituting the second encoded stream 172 correspond to image data items obtained by capturing images at the same timing.

Then, when judging that the correlation value z(j,k) supplied from the correlation value calculation section 253 is equal to or smaller than the predetermined threshold value, the correlation position detection section 254 supplies the corresponding numerical subscripts j and k to the synchronization control section 255.

In response to the supply of the numerical subscripts j and k from the correlation position detection section 254, the synchronization control section 255 synchronizes the image data item corresponding to the j-th encoded data item constituting the first encoded stream 171 and the image data item corresponding to the k-th encoded data item constituting the second encoded stream 172 with each other.

In other words, for example, the synchronization control section 255 controls the synchronization section 79 to decode the first encoded stream 171 from the j-th encoded data item and decode the second encoded stream 172 from the k-th encoded data item. Then, the synchronization control section 255 controls the synchronization section 79 to output the image data items obtained by the decoding thereof at the same timing.

(Description on operation of frame controller 78a)

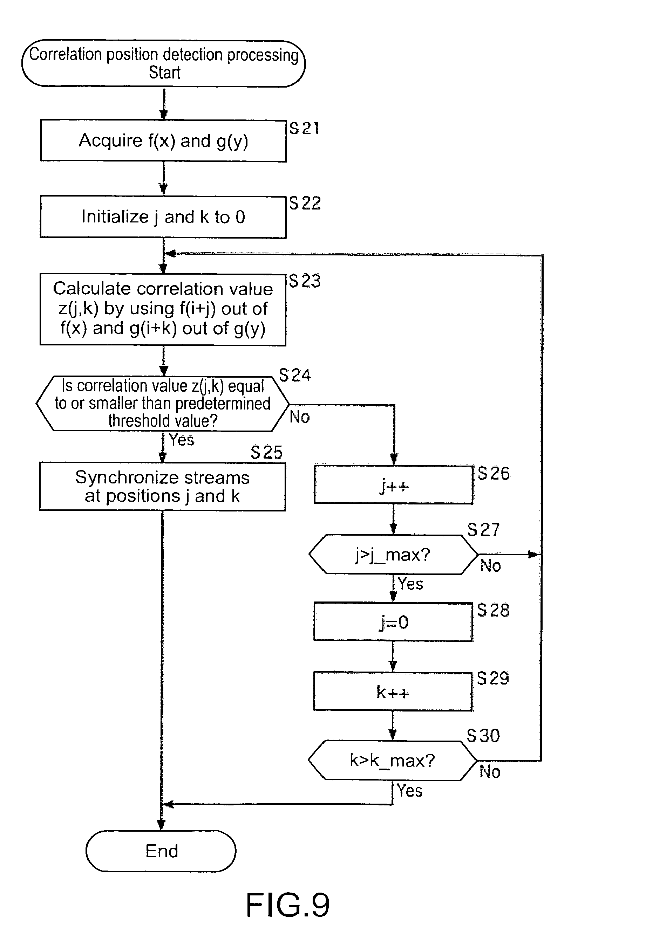

Next, with reference to a flowchart of Fig. 9, descriptions will be given on details of correlation position detection processing in which a combination (j,k) obtained when the correlation value z(j,k) is equal to or smaller than the predetermined threshold value is detected out of combinations (j,k) of a position j in the first encoded stream 171 and a position k in the second encoded stream 172.

In Step S21, the acquisition section 251 reads the header added to the first encoded stream 171 recorded in the HDD 24. The acquisition section 251 then acquires a data size of an encoded data item constituting the first encoded stream 171 f(x)(x = 1, 2, ...) from the read header and supplies it to the correlation value calculation section 253.

Further, the acquisition section 252 reads the header added to the second encoded stream 172 recorded in the HDD 28. The acquisition section 252 then acquires a data size of an encoded data item constituting the second encoded stream 172 g(y)(y = 1, 2, ...) from the read header and supplies it to the correlation value calculation section 253.

In Step S22, the correlation value calculation section 253 initializes each of the numerical subscripts j and k (sets to 0).

In Step S23, the correlation value calculation section 253 applies the data size f(x) supplied from the acquisition section 251 and the data size g(y) supplied from the acquisition section 252 to Equation (1) and calculates a correlation value z(j,k).

The correlation value calculation section 253 then supplies the correlation value z(j,k) calculated from Equation (1) to the correlation position detection section 254 together with the numerical subscripts j and k.

In Step S24, the correlation position detection section 254 judges whether the correlation value z(j,k) supplied from the correlation value calculation section 253 is equal to or smaller than the predetermined threshold value, that is, whether it is highly possible that the j-th encoded data item constituting the first encoded stream 171 and the k-th encoded data item constituting the second encoded stream 172 correspond to image data item obtained by capturing images at the same timing.

Then, when judging that the correlation value z(j,k) supplied from the correlation value calculation section 253 is equal to or smaller than the predetermined threshold value, the correlation position detection section 254 supplies the numerical subscripts j and k to the synchronization control section 255, and the processing proceeds to step S25.

In Step S25, in response to the supply of the numerical subscripts j and k from the correlation position detection section 254, the synchronization control section 255 synchronizes the j-th image data item constituting the first video stream 171' and the k-th image data item constituting the second video stream 172' with each other.

Further, the synchronization control section 255 similarly synchronizes a (j+1)-th and subsequent image data items out of the image data items constituting the first video stream 171' and a (k+1)-th and subsequent image data items out of the image data items constituting the second video stream 172' with each other so as to be output at the same timing, and the processing is ended.

Further, when the correlation position detection section 254 judges that the correlation value z(j,k) supplied from the correlation value calculation section 253 is not equal to or smaller than the predetermined threshold value, the processing proceeds to Step S26.

In Step S26, the correlation value calculation section 253 adds 1 to the numerical subscript j, and the numerical subscript j after the addition is set as a new numerical subscript j.

In Step S27, the correlation value calculation section 253 judges whether the numerical subscript j is larger than the number of encoded data items constituting the first encoded stream 171, the number being represented by j_max. When the correlation value calculation section 253 judges that the numerical subscript j is not larger than the number j_max, the processing returns to Step S23, and the same processing are repeated subsequently.

Further, in Step S27, when the correlation value calculation section 253 judges that the numerical subscript j is larger than the number j_max, the processing proceeds to Step S28.

In Step S28, the correlation value calculation section 253 initializes the numerical subscript j (sets to 0).

In Step S29, the correlation value calculation section 253 adds 1 to the numerical subscript k, and the numerical subscript k after the addition is set as a new numerical subscript k.

In Step S30, the correlation value calculation section 253 judges whether the numerical subscript k is larger than the number of encoded data items constituting the second encoded stream 172, the number being represented by k_max. When the correlation value calculation section 253 judges that the numerical subscript k is not larger than the number k_max, the processing returns to Step S23, and the same processing are repeated subsequently.

On the other hand, when the correlation value calculation section 253 judges that the numerical subscript k is larger than the number k_max in Step S30, the processing is ended.

With this processing, the correlation position detection processing is ended.

As described above, in the correlation position detection processing, the correlation value $z(j,k)$ is calculated based on the data sizes of the first encoded stream 171 and the second encoded stream 172, and when the calculated correlation value $z(j,k)$ is equal to or smaller than the predetermined threshold value, a j-th image data item in the first video stream 171' and a k-th image data item in the second video stream 172' are synchronized with each other.

Accordingly, in the correlation position detection processing, even when a shift in time is caused between an image data item and its corresponding audio data item as in the first related art, it is possible to accurately synchronize the first video stream 171' and the second video stream 172' based on the correlation value $z(j,k)$ calculated from the data sizes.

In addition, in the correlation position detection processing, the first video stream 171' and the second video stream 172' are synchronized with each other using the correlation value $z(j,k)$ calculated from the data sizes. As a result, two streams can be synchronized with each other without performing special processing such as recording a time stamp that represents a time at which image data is acquired, in order to synchronize the video streams with each other.

In other words, for example, it is possible to synchronize video streams with each other by comparing data sizes thereof, even with respect to video streams captured using a camera that does not record time stamps or video streams recorded by the recording system 121 or the like in which timings at which recording of the video streams is started are shifted.

It should be noted that in the correlation position detection processing, the j-th image data item constituting the first video stream 171' and the k-th image data item constituting the second video stream 172' are synchronized with each other in Step S25.

However, in a case where after the processing of Step S25, a user judges that the j-th image data item constituting the first video stream 171' and the k-th image data item constituting the second video stream 172' are not image data items obtained by capturing images at the same timing by viewing the synchronized image data items on a display or the like, the processing may be started from Step S26 in accordance with a user operation.

Further, in a case where the image data items obtained by capturing images at the same timing are difficult to be synchronized with each other by the correlation position detection processing, the user may synchronize the first video stream 171' and the second video stream 172' while checking an image that corresponds to the image data items, the image being displayed on the display or the like, with reference to processing results by the correlation position detection processing.

In this case, by the user only checking the image that corresponds to the image data items, the image being displayed on the display or the like, it is possible to synchronize the first video stream 171' and the second video stream 172' more speedily as compared to a case where the first video stream 171' and the second video stream 172' are synchronized with each other by the user's manual operation.

(2. Modified example)

In this embodiment, the correlation value $z(j,k)$ is calculated using the data sizes $f(x)$ and $g(y)$ of encoded data items obtained by performing the variable bit rate control on image data items, and in a case where the calculated correlation value $z(j,k)$ is equal to or smaller than a predetermined threshold value, a j-th image data item constituting the first video stream 171' and a k-th image data item constituting the second video stream 172' are synchronized with each other.

In this embodiment, however, in a case where an encoded stream is obtained by encoding (compressing) image data items at the same compression rate using the intra-frame encoding by the constant bit rate control, or obtained by compressing image data items by an encoding method such as an MPEG encoding method, in which a correlation between image data items is used for encoding, it is difficult to calculate a correlation value $z(j,k)$ between encoding data items with the use of a difference between data sizes thereof.

In this case, in the reproduction apparatus 191, it is possible to provide a new decoder for decoding an encoded stream obtained through encoding or the like that corresponds to the intra-frame encoding by the constant bit rate control or the MPEG encoding method, and a new decoder for intra-frame encoding, by the variable bit rate control, a video stream obtained by the decoding performed by the former new decoder.

That is, the reproduction apparatus 191 decodes an encoded stream using the former new decoder and intra-frame encodes a video stream obtained as the result of the above by the variable bit rate control using the latter decoder, and acquires a new encoded stream obtained as the result of the above. Then, the reproduction apparatus 191 can implement the embodiment of the present invention with the acquired new encoded stream as a target.

Further, in this embodiment, the image data items obtained when the correlation value $z(j,k)$ is equal to or smaller than the predetermined threshold value are detected. However, in a case where the encoded stream is constituted of GOPs (Group of Pictures) each including a plurality of pictures encoded by the MPEG encoding method, it is possible to detect the GOPs obtained when the correlation value $z(j,k)$ is equal to or smaller than the predetermined threshold value.

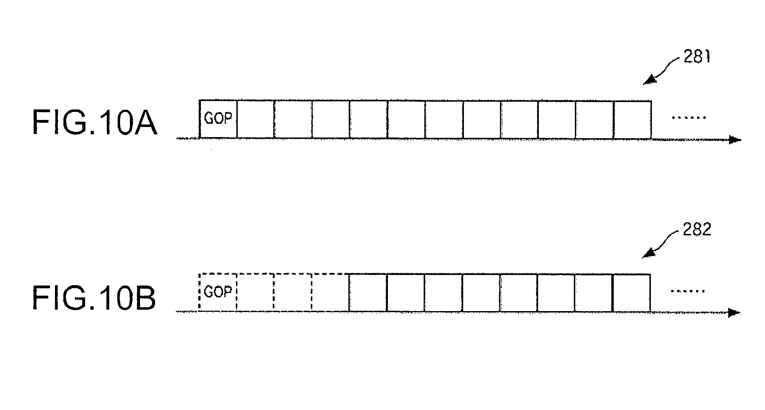

Figs. 10 show a method of detecting the GOPs obtained when the correlation value $z(j,k)$ is equal to or smaller than the predetermined threshold value.

It should be noted that horizontal axes represent the same time in Figs. 10A and 10B.

For example, as shown in Fig. 10A, a first encoded stream 281 constituted of GOPs each including a plurality of pictures (for example, 15 pictures) is recorded in the HDD 24 of the reproduction apparatus 191.

Further, for example, as shown in Fig. 10B, a second encoded stream 282 constituted of GOPs each including the same number of pictures as that of the GOPs constituting the first encoded stream 281 is recorded in the HDD 28 of the reproduction apparatus 191.

The reproduction apparatus 191 calculates the correlation value $z(j,k)$ based on a data size of each of the GOPs constituting the first encoded stream 281 recorded in the HDD 24 and a data size of each of the GOPs constituting the second encoded stream 282 recorded in the HDD 28.

When the calculated correlation value $z(j,k)$ is equal to or smaller than the predetermined threshold value, the reproduction apparatus 191 detects a j-th GOP constituting the first encoded stream 281 and a k-th GOP constituting the second encoded stream 282.

Then, the reproduction apparatus 191 decodes the detected GOPs by an MPEG decoding method and acquires video streams including a plurality of image data items obtained by the decoding. The reproduction apparatus 191 intra-frame encodes the acquired two video streams by the variable bit rate control, and performs the correlation position detection processing described above on two encoded streams consequently obtained.

With this, as compared to the case where all the GOPs constituting each of the first encoded stream 281 and the second encoded stream 282 are decoded and the correlation position detection processing is performed on the resultants obtained by performing the intra-frame encoding by the variable bit rate control, it is possible to more speedily detect positions where the two video streams are synchronized wit each other.

In the reproduction apparatus 191, the detected two GOPs may be decoded, and then video streams as the resultants of the decoding may be sequentially displayed on a display or the like and synchronized with each other by the user's manual operation.

It should be noted that in this embodiment, the first video stream 171' and the second video stream 172' are synchronized with each other based on the correlation value $z(j,k)$ calculated from the data size. For example, it is possible to combine image data items of the first video stream 171' and the second video stream 172' synchronized with each other and generate an image stereoscopically viewable, or display image data items at the same timing on two difference displays.

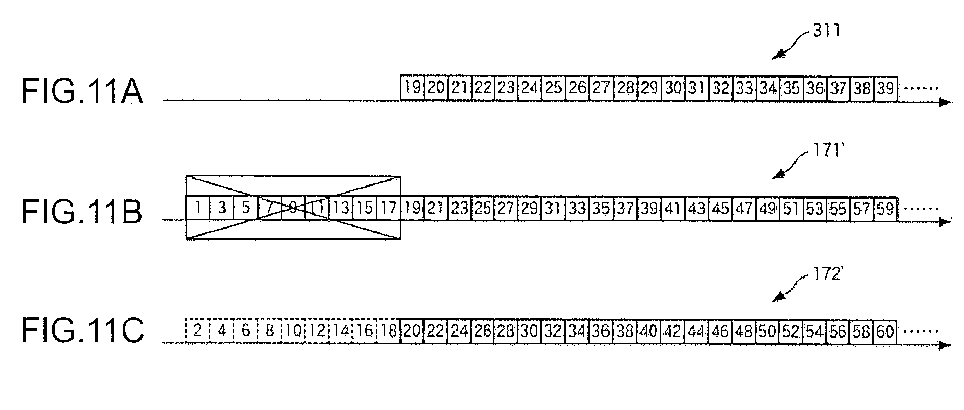

Further, as shown in Figs. 11, it is possible to set a frame rate of an output video stream to be a higher frame rate so that the first video stream 171' and the second video stream 172' are synchronized with each other.

Figs. 11 show a method of setting a frame rate of an output video stream to be a higher frame rate.

It should be noted that in Fig. 11A, a third video stream 311 represents a video stream of a high frame rate, the video stream being generated from the first video stream 171' and the second video stream 172' and output.

Further, in Fig. 11B, the first video stream 171' is constituted of image data items that are adopted as odd-numbered image data items in the output third video stream 311.

In Fig. 11C, the second video stream 172' is constituted of image data items that are adopted as even-numbered image data items in the output third video stream 311.

It should be noted that in Figs. 11, the first video stream 171' and the second video stream 172' are obtained by capturing images of the same subject in (substantially) the same direction.

The reproduction apparatus 191 synchronizes the first video stream 171' and the second video stream 172' with each other and sets the image data items constituting the first video stream 171' and the image data items constituting the second video stream 172' as the odd-numbered image data items and the even-numbered image data items, respectively, thus outputting the third video stream 311 obtained by alternately arranging those image data items.

Accordingly, the reproduction apparatus 191 can set the frame rate of the output third video stream 311 to be double, as compared to a case where any of the first video stream 171' and the second video stream 172' is output, for example.

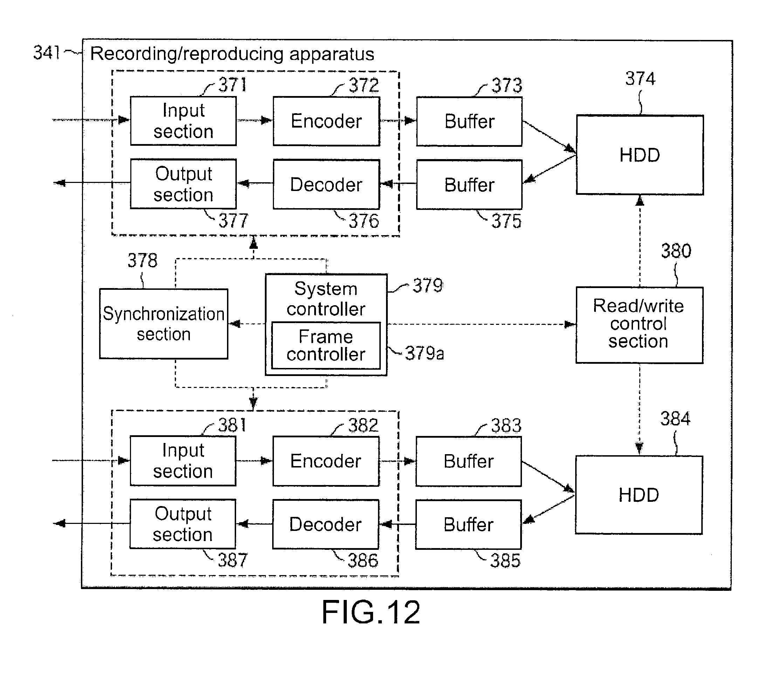

Further, the embodiment of the present invention can be applied to a recording/reproducing apparatus 341 having a function of the recording system 121, for example, in addition to the function of the reproduction apparatus 191, as shown in Fig. 12.

Fig. 12 shows the recording/reproducing apparatus 341 having both the function of the reproduction apparatus 191 to which the embodiment of the present invention is applied and the function of the recording system 121 in related art.

The recording/reproducing apparatus 341 includes an input section 371 to an HDD 374 structured the same as the input section 21 to the HDD 24 of Fig. 4, a buffer 375 to an output section 377 structured the same as the buffer 71 to the output section 73 of Fig. 6, a synchronization section 378 structured the same as the synchronization section 79, a system controller 379 structured the same as the system controller 78 and the system controller 141, a frame controller 379a structured the same as the frame controller 78a, a read/write control section 380 structured the same as the write control section 31 and the read control section 77, an input section 381 to an HDD 384 structured the same as the input section 25 to the HDD 28, and a buffer 385 to an output section 387 structured the same as the buffer 74 to the output section 76.

It should be noted that in this embodiment, Equation (1) is used as an equation for calculating a correlation value z(j,k), but the present approach is not limited thereto. Any equation may be used as long as a value representing a degree of similarity between image data corresponding encoded data constituting the first encoded stream 171 and image data corresponding to encoded data constituting the second encoded stream 172 is calculated.

Accordingly, for example, it is possible to adopt $\Sigma\{f(j-i)-g(k-1)\}^2$, $\Sigma\{f(2i+j)-g(2i+k)\}^2$, $\Sigma(f(2i+1+j)-g(2i+1+k)\}^2$, a summation $\Sigma|f(i+j)-g(i+k)|$ of an absolute difference $|f(i+j)-g(i+k)|$ between a data size $f(i+j)$ and a data size $g(i+k)$, or the like, as an equation for calculating the correlation value z(j,k).

Incidentally, in hard disk video recorders, conversion of a frame rate from a normal frame rate to a high frame rate have been recently performed like a case where an image quality of image data to be recorded is converted from a normal image quality to a high image quality or a screen resolution is converted from SD (standard Definition) to HD (High Definition).

Accordingly, in the hard disk video recorders, a data size of encoded data per unit time that is recorded in a built-in hard disk become increased and it takes a lot of time to perform encoding processing in which image data is encoded, in some cases.

In this case, it is conceived that the hard disk video decoder is provided with a plurality of processing sections for performing encoding processing, and a recording video stream constituted of image data to be recorded is divided into a plurality of video streams (for example, video stream constituted of even-numbered image data items out of image data items of the recording video stream, and video stream constituted of odd-numbered image data items out of image data items of the recording video stream), and encoding processing is performed on the plurality of video streams by the plurality of processing sections, to thereby shorten a time necessary for the encoding processing.

When the hard disk video decoder is structured as described above, it is necessary to synchronize the plurality of video streams obtained by dividing the recording video stream and restore them to the original recording video stream. In this case as well, the present approach can be applied in order to synchronize the plurality of video streams.

Incidentally, a series of processing described above can be executed by dedicated hardware or software. In a case where the series of processing is executed by software, a program constituting that software is installed, from a recording medium, in a so-called built-in computer, a general-purpose computer capable of executing various types of functions by installing various types of programs, or the like.

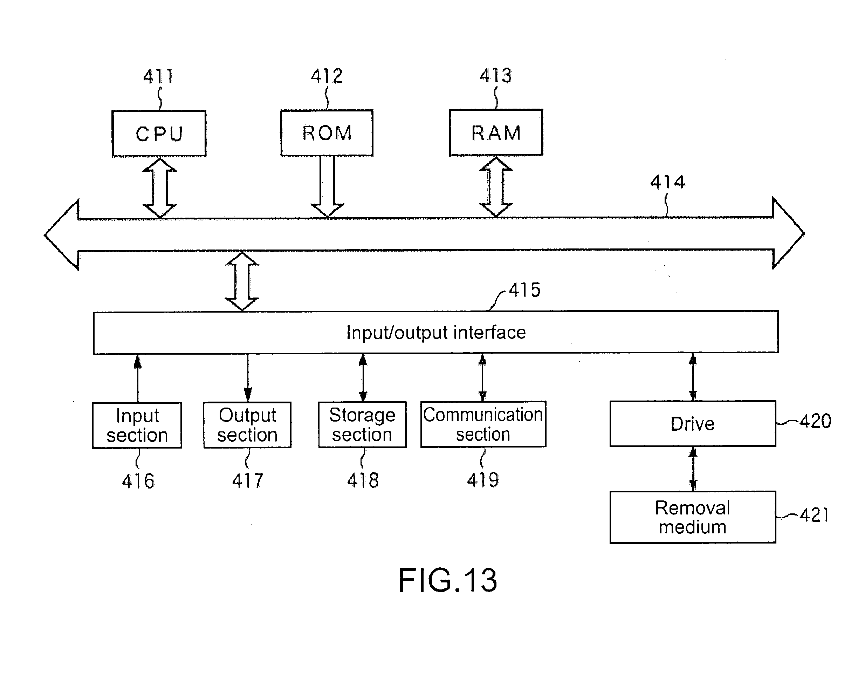

Fig. 13 shows a structural example of a personal computer that executes the series of processing described above by a program.

A CPU (Central Processing Unit) 411 executes various types of processing according to a program stored in a ROM (Read Only Memory) 412 or a storage section 418. A RAM (Random Access Memory) 413 stores a program executed by the CPU 411, data, or the like as appropriate. Those CPU 411, ROM 412, and RAM 413 are connected to each other via a bus 414.

To the CPU 411, an input/output interface 415 is also connected via the bus 414. To the input/output interface 415, an input section 416 constituted of a keyboard, a mouse, a microphone, or the like, and an output section 417 constituted of a display, a speaker, or the like are connected. The CPU 411 executes various types of processing in accordance with instructions input from the input section 416. Then, the CPU 411 outputs results of the processing to the output section 417.

The storage section 418 connected to the input/output interface 415 is constituted of a hard disk, for example, and stores a program executed by the CPU 411 and various types of data. A communication section 419 communicates with an external apparatus via a network such as the Internet and a local area network.

Further, a program may be acquired via the communication section 419 and stored in the storage section 418.

A drive 420 connected to the input/output interface 415 drives a removable medium 421 such as a magnetic disc, an optical disc, a magnet-optical disc, and a semiconductor memory when they are mounted thereto, and acquires a program, data, or the like recorded thereon. The program or data acquired is transmitted to the storage section 418 as appropriate, and stored therein.

Examples of the recording medium that is installed in a computer and records (stores) a program executable by the computer include, as shown in Fig. 13, the removable medium 421 as a package medium constituted of a magnetic disc (including flexible disc), an optical disc (including CD-ROM (Compact Disc-Read Only Memory) and DVD (Digital Versatile Disc)), a magnet-optical disc (including MD (Mini-Disc)), and a semiconductor memory, the ROM 412 in which a program is temporarily or permanently stored, and a hard disk that constitutes the storage section 418. The program is recorded on the recording medium through a wireless or wired transmission medium such as a local area network, the Internet, and, digital broadcasting, via the communication section 419 serving as an interface such as a router and a modem as appropriate.

It should be noted that herein, the step of describing the correlation position detection processing includes of course processing performed in a chronological order along the order described herein and processing performed in parallel or separately even if the processing is not performed in the chronological order.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, subcombinations and alterations may occur depending on design requirements and other factors insofar as they are within the scope of the appended claims or the equivalents thereof.

**Claims**

1. An image processing apparatus synchronizing a first video stream constituted of a plurality of image data items and a second video stream different from the first video stream, the image processing apparatus comprising:

   a calculation means for calculating, based on a data size of each of the plurality of image data items constituting the first video stream and the data size of each of image data items constituting the second video stream, a correlation value that represents a degree of similarity between the plurality of image data items constituting the first video stream and the image data items constituting the second video stream; and
   a detection means for detecting the image data items constituting the second video stream and corresponding to the plurality of image data items constituting the first video stream based on the correlation value.

2. The image processing apparatus according to claim 1, further comprising
   an encoding means for intra-frame encoding the first video stream and the second video stream by variable bit rate control in which the data size after the encoding is changed in accordance with image contents of the image data items, wherein the calculation means calculates the correlation value based on the data size of each of the plurality of image data items constituting the encoded first video stream and the data size of each of the image data items constituting the encoded second video stream.

3. The image processing apparatus according to claim 2, further comprising
   a decoding means for decoding the first video stream and the second video stream that have been encoded by an encoding different from the intra-frame encoding by the variable bit rate control, wherein the encoding means intra-frame encodes the decoded first video stream and the decoded second video stream by the variable bit rate control.

4. The image processing apparatus according to any preceding claim,
   wherein the calculation means calculates the correlation value that represents a degree of similarity in GOPs (Group of Pictures) between the plurality of image data items constituting the first video stream and the image data items constituting the second video stream, based on the data size of the GOP having the plurality of image data items constituting the first video stream and the data size of the GOP having the image data items constituting the second video stream, and

wherein the detection means detects the image data items constituting the second video stream and corresponding to the plurality of image data items constituting the first video stream in GOPs based on the correlation value.

5. The image processing apparatus according to any preceding claim,
wherein the calculation means calculates a sum of squared differences between the data size of each of the plurality of image data items constituting the first video stream and the data size of each of the image data items constituting the second video stream, as the correlation value, and
wherein the detection means detects the image data items constituting the second video stream when the correlation value between the plurality of image data items constituting the first video stream and the image data items constituting the second video stream is equal to or smaller than a predetermined threshold value.

6. The image processing apparatus according to any preceding claim,
wherein the image data items constituting each of the first video stream and the second video stream are different from each other in data size in accordance with the image contents of the image data items.

7. An image processing method for an image processing apparatus that synchronizes a first video stream constituted of a plurality of image data items and a second video stream different from the first video stream, the image processing apparatus including a calculation means and a detection means,
the image processing method, comprising:

calculating, by the calculation means, based on a data size of each of the plurality of image data items constituting the first video stream and the data size of each of image data items constituting the second video stream, a correlation value that represents a degree of similarity between predetermined image data items constituting the first video stream and the image data items constituting the second video stream; and
detecting, by the detection means, the image data items constituting the second video stream and corresponding to the plurality of image data items constituting the first video stream based on the correlation value.

8. A recording medium recording a program causing a computer of an image processing apparatus that synchronizes a first video stream constituted of a plurality of image data items and a second video stream different from the first video stream, to function as:

a calculation means for calculating, based on a data size of each of the plurality of image data items constituting the first video stream and the data size of each of image data items constituting the second video stream, a correlation value that represents a degree of similarity between predetermined image data items constituting the first video stream and the image data items constituting the second video stream; and
a detection means for detecting the image data items constituting the second video stream and corresponding to the plurality of image data items constituting the first video stream based on the correlation value.

9. An image processing apparatus synchronizing a first video stream constituted of a plurality of image data items and a second video stream different from the first video stream, the image processing apparatus comprising:

a calculation section to calculate, based on a data size of each of the plurality of image data items constituting the first video stream and the data size of each of image data items constituting the second video stream, a correlation value that represents a degree of similarity between the plurality of image data items constituting the first video stream and the image data items constituting the second video stream; and
a detection section to detect the image data items constituting the second video stream and corresponding to the plurality of image data items constituting the first video stream based on the correlation value.

FIG.1

EP 2 227 029 A2

Reproduction system

First video stream → Output section (73) ← Decoder (72) ← Buffer (71) ← HDD (24)

Synchronization section (79) ← System controller (78) → Read control section (77)

Second video stream → Output section (76) ← Decoder (75) ← Buffer (74) ← HDD (28)

51

FIG.2

EP 2 227 029 A2

Recording timing

FIG.3A

1 2 3 4 5 6 7 8 9 10 11 12 13 14 15 16 17 18 19 20 21 22 23 24 25 26 27 28 29 30 ······

101

to

Recording timing

FIG.3B

1 2 3 4 5 6 7 8 9 10 11 12 13 14 15 16 17 18 19 20 21 22 23 24 25 26 27 28 29 30 ······

102

to

Reproduction timing

FIG.3C

1 2 3 4 5 6 7 8 9 10 11 12 13 14 15 16 17 18 19 20 21 22 23 24 25 26 27 28 29 30 ······

101'

Reproduction timing

FIG.3D

1 2 3 4 5 6 7 8 9 10 11 12 13 14 15 16 17 18 19 20 21 22 23 24 25 26 27 28 29 30 ······

102'

121

Recording system

| 21 | 22 | 23 | 24 |

First
video stream → Input section → Encoder → Buffer → HDD

141                                    31

System controller → Write control section

| 25 | 26 | 27 | 28 |

Second
video stream → Input section → Encoder → Buffer → HDD

FIG.4

FIG.5A

Recording timing

171

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | ......

FIG.5B

Recording timing

172

| 1 | 2 | 3 | 4 | 5 | 6 | 7 | 8 | 9 | 10 | 11 | 12 | 13 | 14 | 15 | 16 | 17 | 18 | 19 | 20 | 21 | ......

to                    t1

FIG.5C

Reproduction timing

171'

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | ......

FIG.5D

Reproduction timing

172'

| 1 | 2 | 3 | 4 | 5 | 6 | 7 | 8 | 9 | 10 | 11 | 12 | 13 | 14 | 15 | 16 | 17 | 18 | 19 | 20 | 21 | ......

FIG.6

Recording timing

FIG.7A

171

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 |

to

Recording timing

FIG.7B

172

| 1 | 2 | 3 | 4 | 5 | 6 | 7 | 8 | 9 | 10 | 11 | 12 | 13 | 14 | 15 | 16 | 17 | 18 | 19 | 20 | 21 |

t1

Reproduction timing

FIG.7C

171'

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 |

Reproduction timing

FIG.7D

172'

| 1 | 2 | 3 | 4 | 5 | 6 | 7 | 8 | 9 | 10 | 11 | 12 | 13 | 14 | 15 | 16 | 17 | 18 | 19 | 20 | 21 |

FIG.8

Correlation position detection processing
Start

Acquire f(x) and g(y)  S21

Initialize j and k to 0  S22

Calculate correlation value
z(j,k) by using f(i+j) out of
f(x) and g(i+k) out of g(y)  S23

Is correlation value z(j,k) equal
to or smaller than predetermined
threshold value?  S24

No

Yes

Synchronize streams
at positions j and k  S25

j++  S26

j>j_max?  S27

No

Yes

j=0  S28

k++  S29

k>k_max?  S30

No

Yes

End

FIG.9

EP 2 227 029 A2

FIG.10A

281

GOP

......

FIG.10B

282

GOP

......

EP 2 227 029 A2

**FIG.11A** 311
| 19 | 20 | 21 | 22 | 23 | 24 | 25 | 26 | 27 | 28 | 29 | 30 | 31 | 32 | 33 | 34 | 35 | 36 | 37 | 38 | 39 | ⋯⋯

**FIG.11B** 171'
| 1 | 3 | 5 | 7 | 9 | 11 | 13 | 15 | 17 | 19 | 21 | 23 | 25 | 27 | 29 | 31 | 33 | 35 | 37 | 39 | 41 | 43 | 45 | 47 | 49 | 51 | 53 | 55 | 57 | 59 | ⋯⋯

**FIG.11C** 172'
| 2 | 4 | 6 | 8 | 10 | 12 | 14 | 16 | 18 | 20 | 22 | 24 | 26 | 28 | 30 | 32 | 34 | 36 | 38 | 40 | 42 | 44 | 46 | 48 | 50 | 52 | 54 | 56 | 58 | 60 | ⋯⋯

341 — Recording/reproducing apparatus

371 **Input section** → 372 **Encoder** → 373 **Buffer** → 374 **HDD**

377 **Output section** ← 376 **Decoder** ← 375 **Buffer**

378 **Synchronization section**

379 **System controller**
379a **Frame controller**

380 **Read/write control section**

381 **Input section** → 382 **Encoder** → 383 **Buffer** → 384 **HDD**

387 **Output section** ← 386 **Decoder** ← 385 **Buffer**

## FIG.12

411            412            413

| CPU | | ROM | | RAM |

414

415

| Input/output interface |

| Input section | Output section | Storage section | Communication section | Drive |

416        417        418        419

420

| Removal medium |

421

FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007288269 A
- JP 2003304442 A
- JP 11150727 A